# EUROPEAN PATENT APPLICATION

(11) **EP 2 518 955 A1**
(43) Date of publication of application: **31.10.2012**
(21) Application number: 11163663.5
(22) Date of filing: 26.04.2011
(51) Int. Cl.: H04L 12/58

(54) **Method, system and apparatus for managing messages**

(71) Applicant: Research In Motion Limited, Waterloo, ON N2L 3W8 (CA)
(72) Inventor: Buong, Thanh Vinh, Waterloo Ontario N2L 3W8 (CA)
(74) Representative: MERH-IP Matias Erny Reichl Hoffmann

(57) **Abstract**

According to embodiments described in the specification, a method, system and apparatus for managing messages is provided. The method comprises receiving a first message (305), the message containing one or more recipient identifiers and a subject; controlling a display to generate a message interface comprising a representation of the first message (310); receiving a command from an input device (315), the command being a command to suppress subsequent messages related to the first message; selecting suppression criteria including the subject and at least one of the one or more recipient identifiers (320); receiving input data comprising at least one additional suppression criterion (325); and, suppressing the display of subsequently received messages based on the suppression criteria and the at least one additional suppression criterion (330).

## Description

### FIELD

The specification relates generally to message communications, and specifically to a method, system and apparatus for managing messages.

### BACKGROUND

The capabilities of mobile electronic devices (such as cellular phones, smart phones and the like) continue to grow, enabling such devices to perform increasingly numerous and complex tasks. The resources of these devices (e.g. battery power, display area, computational power, memory capacity), however, remain scarce in comparison to their mains-powered and wired counterparts, particularly in the context of the ever greater demands imposed on mobile electronic devices for increased functionality. Thus, particularly in the area of messaging communications, the resources of mobile electronic devices remain relatively limited and continue to be used inefficiently.

### GENERAL

According to an aspect of the specification, a method of managing messages at a mobile electronic device is provided, the method comprising: receiving a first message, the message containing one or more recipient identifiers and a subject; controlling a display to generate a message interface comprising a representation of the first message; receiving a command from an input device, the command being a command to suppress subsequent messages related to the first message; selecting suppression criteria including the subject and at least one of the one or more recipient identifiers; receiving input data comprising at least one additional suppression criterion; and, suppressing the display of subsequently received messages based on the suppression criteria and the at least one additional suppression criterion.

At least one of the one or more recipient identifiers can comprises an e-mail address. The at least one e-mail address can comprise a distribution list e-mail address.

According to another aspect of the specification, a mobile electronic device is provided, comprising: an input device; a display; a communications interface; a memory; and, a processor interconnected with the input device, the display, the communications interface and the memory, the processor configured to receive a first message via the communications interface, the message containing one or more recipient identifiers and a subject; the processor further configured to control the display to generate a message interface comprising a representation of the first message; the processor further configured to receive a command from the input device, the command being a command to suppress subsequent messages related to the first message; the processor further configured to select suppression criteria including the subject and at least one of the one or more recipient identifiers; the processor further configured to receive input data comprising at least one additional suppression criterion; and, the processor further configured to suppress the display of subsequently received messages based on the suppression criteria and the at least one additional suppression criterion.

According to a further aspect of the specification, a non-transitory computer-readable medium is provided for storing a plurality of computer-readable instructions executable by a processor, the computer-readable instructions for implementing the above method.

### BRIEF DESCRIPTIONS OF THE DRAWINGS

Embodiments are described with reference to the following figures, in which:

Figure 1 depicts a system for handling messages, according to a non-limiting embodiment;

Figure 2 depicts a local message store maintained by the mobile electronic device of Figure 1, according to a non-limiting embodiment;

Figure 3 depicts a method of handling messages, according to a non-limiting embodiment;

Figure 4 depicts a message interface generated by the mobile electronic device of Figure 1, according to a non-limiting embodiment;

Figure 5 depicts a suppression criteria store maintained by the mobile electronic device of Figure 1, according to a non-limiting embodiment;

Figure 6 depicts a further interface generated by the mobile electronic device of Figure 1, according to a non-limiting embodiment;

Figure 7 depicts a method of suppressing the display of messages, according to a non-limiting embodiment;

Figure 8 depicts a method of suppressing the display of messages, according to another non-limiting embodiment;

Figure 9 depicts a message interface, according to a further non-limiting embodiment;

Figure 10 depicts a method of suppressing the display of messages, according to a further non-limiting embodiment; and

Figure 11 depicts an override criteria store, according to a non-limiting embodiment.

### DETAILED DESCRIPTION OF THE EMBODIMENTS

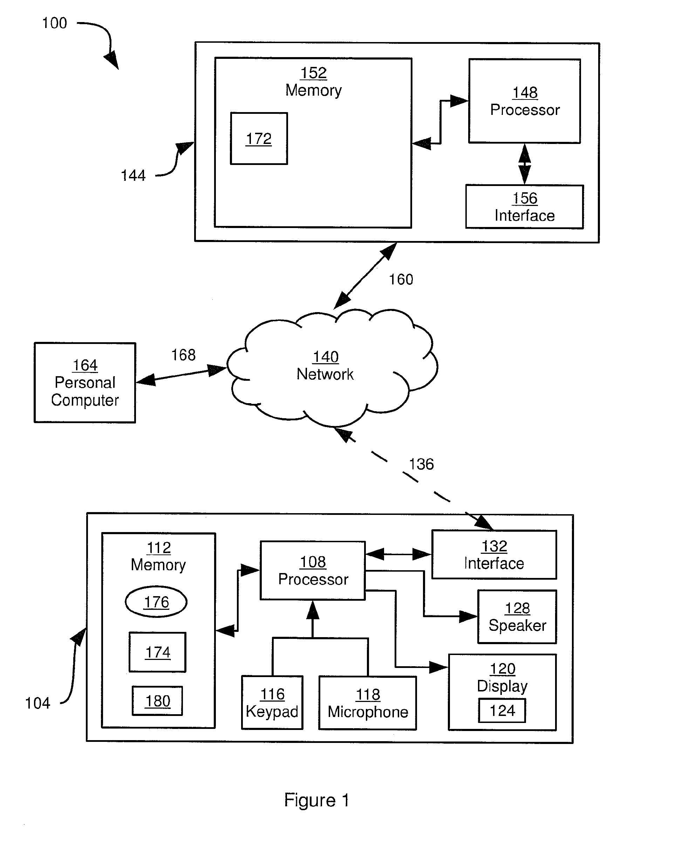

Figure 1 depicts a communications system 100. System 100 includes a mobile electronic device 104, which in some embodiments is based on the computing environment and functionality of a hand-held wireless communication device. It will be understood, however, that mobile electronic device 104 is not limited to a hand-held wireless communication device. Other mobile electronic devices are also contemplated, such as cellular telephones, smart telephones, Personal Digital Assistants ("PDAs"), media (e.g. MP3) players, laptop computers, tablet computers and the like.

Mobile electronic device 104 includes a processor 108 interconnected with a non-transitory computer readable storage medium such as a memory 112. Memory 112 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. Mobile electronic device 104 also includes one or more input devices interconnected with processor 108. Such input devices are configured to receive input and provide input data representative of the received input to processor 108. Input devices can include, for example, a keypad 116 and a microphone 118. It is contemplated that mobile electronic device 104 can include additional input devices in the form of one or more touch screens, buttons, light sensors and the like (not shown). In general, it is contemplated that any suitable combination of the above-mentioned input devices can be incorporated into mobile electronic device 104.

Mobile electronic device 104 further includes one or more output devices. The output devices of mobile electronic device 104 include a display 120. Display 120 includes display circuitry 124 controllable by processor 108 for generating interfaces which include representations of data and/or applications maintained in memory 112. Display 120 includes a flat panel display comprising any one, or suitable combination, of a Liquid Crystal Display (LCD), a plasma display, an Organic Light Emitting Diode (OLED) display, and the like. Circuitry 124 can thus include any suitable combination of display buffers, transistors, LCD cells, plasma cells, phosphors, LEDs and the like. In embodiments that include a touch screen input device, the touch screen can be integrated with display 120.

The output devices of mobile electronic device 104 can also include a speaker 128 interconnected with processor 108. Additional output devices can also be included, such as a light-emitting indicator (not shown) in the form of an LED, and the like.

Mobile electronic device 104 also includes a communications interface 132 interconnected with processor 108. Communications interface 132 allows mobile electronic device 104 to communicate with other computing devices via a link 136 and a network 140. Network 140 can include any suitable combination of wired and/or wireless networks, including but not limited to a Wide Area Network (WAN) such as the Internet, a Local Area Network (LAN), cell phone networks, WiFi networks, WiMax networks and the like. Link 136 is compatible with network 140. In particular, link 136 can be a wireless link based on any of Global System for Mobile communications (GSM), General Packet Radio Service (GPRS), Enhanced Data rates for GSM Evolution (EDGE), the third and fourth-generation mobile communication system (3G and 4G), Institute of Electrical and Electronic Engineers (IEEE) 802.11 (WiFi) or other wireless protocols. It will be understood that link 136 can also include any base stations and backhaul links necessary to connect mobile electronic device 104 to network 140. It will be understood that communications interface 132 is therefore selected for compatibility with link 136 as well as with network 140.

The various components of mobile electronic device 104 are interconnected, for example via a communication bus (not shown). Mobile electronic device 104 can be powered by a battery (not shown), though it will be understood that mobile electronic device 104 can also be supplied with electricity by a wired connection to a wall outlet or other power source, for example when docked.

System 100 also includes a server 144, which can be based on any known server environment. Server 144 thus includes one or more processors such as a processor 148. Processor 148 is interconnected with a non-transitory computer-readable storage medium, such as a memory 152. Memory 152 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory. Server 144 also includes one or more communications interfaces, such as a communications interface 156, for interconnecting with network 140 via a link 160. In the present embodiment, link 160 is a wired link. It is contemplated, however, that link 160 can be any suitable combination of wired and wireless links.

Server 144 can be managed by way of input and output devices (not shown) such as a keyboard, a mouse and a display. Such input and output devices can be co-located with server 144 and connected with processor 148 via local connections (e.g. Universal Serial Bus (USB)). In other embodiments, the input and output devices can be located at a terminal (not shown) remote from server 144 and connected to server 144 via network 140 and link 160. In some embodiments, both local input devices and a remote terminal can be present, and server 144 can be managed via either the local input devices or the remote terminal, as desired.

System 100 can also include additional computing devices, such as a personal computer 164. It is contemplated that such computing devices can include any number of mobile devices, servers and the like in addition to, or instead of, personal computer 164. Personal computer 164 is connected to network 140 via a link 168, which can be a wired link, a wireless link, or a combination thereof.

In general, mobile electronic device 104 can receive communications such as e-mail messages from other computing devices, including personal computer 164. Server 144 is configured as an e-mail server associated with mobile electronic device 104. That is, server 144 maintains an e-mail account which is associated with mobile electronic device 104. Thus, when an e-mail message destined for mobile electronic device 104 originates at personal computer 164, the message arrives at server 144 via link 168, network 140 and link 160. Server 144 is configured to store the message in a message store 172 maintained in memory 152. Message store 172 is specific to the account associated with mobile electronic device 104, and it is contemplated that server 144 can maintain a plurality of other message stores (not shown) specific to other accounts. In other embodiments, message store 172 itself need not be specific to any particular account, but a portion of message store 172 can be specific to mobile electronic device 104 or an account associated therewith. Server 144 can be configured to transmit the newly received message to mobile electronic device 104, either automatically or in response to a request for new messages from mobile electronic device 104. Upon arrival at mobile electronic device 104, the message is stored in a local message store 174. Thus, the contents of local message store 174 maintained by mobile electronic device 104 can be synchronized with the contents of message store 172.

In addition to local message store 172, mobile electronic device 104 stores a messaging application 176 in memory 112. Messaging application 176 comprises computer-readable instructions which are executable by processor 108. Processor 108 is configured, via execution of messaging application 176, to carry out various functions related to the handling of messages addressed to mobile electronic device 104, as will be discussed in greater detail below.

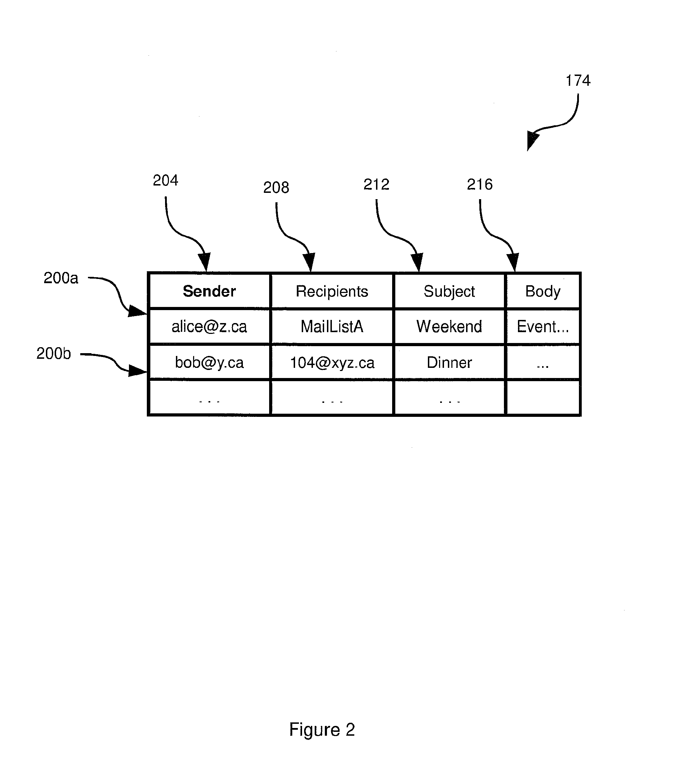

Referring now to Figure 2, an example local message store 174 is depicted. It will be understood that while local message store 174 is depicted in a tabular format, any suitable format can be used. Message store 174 can contain a plurality of e-mail messages, each defined by a record 200 in message store 174. Thus, local message store 174 includes message records 200a and 200b, referred to generically as message records 200. Each record 200 includes a sender address 204 (the sender address of message record 200a is referred to as 204a - this nomenclature will also be used elsewhere herein), one or more recipient addresses 208, a subject 212 and a message body 216. It is contemplated that each message record 200 can also contain other data, such as routing information relevant to the delivery of the message. Recipient addresses can include e-mail addresses such as that shown in record 200b, "104@xyz-ca", which identifies an account associated with mobile electronic device 104. Recipient addresses can also include distribution list identifiers, which correspond to a plurality of individual e-mail addresses. An example of such a list identifier, "MaiIListA", is shown in record 200a.

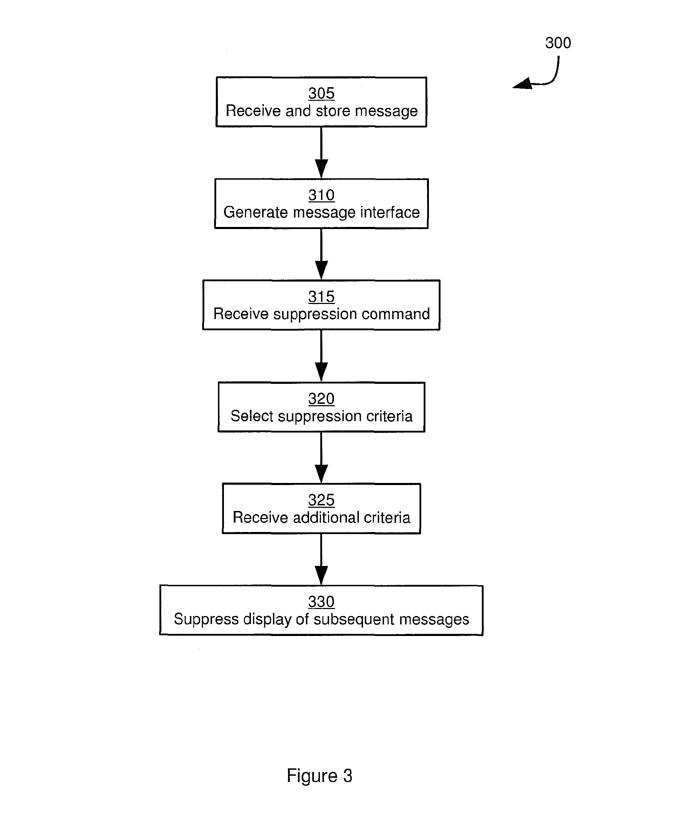

Referring now to Figure 3, a method 300 of handling messages at mobile electronic device 104 is shown. Method 300 will be described in conjunction with its example performance on system 100, though it will be understood that method 300 can be performed on various systems.

Beginning at block 305, processor 108 is configured, by way of execution of messaging application 176, to receive a message from server 144 via communications interface 132. As noted above, the message received at block 305 can be received as a result of an earlier request issued from communications interface 132, or as a result of an automatic transmission by server 144. Following receipt of the message, the message is stored in local message store 174. For the present example performance of method 300, it will be assumed that the received message is the message contained in message record 200a, as depicted in Figure 2 and referred to hereinafter as "message 200a".

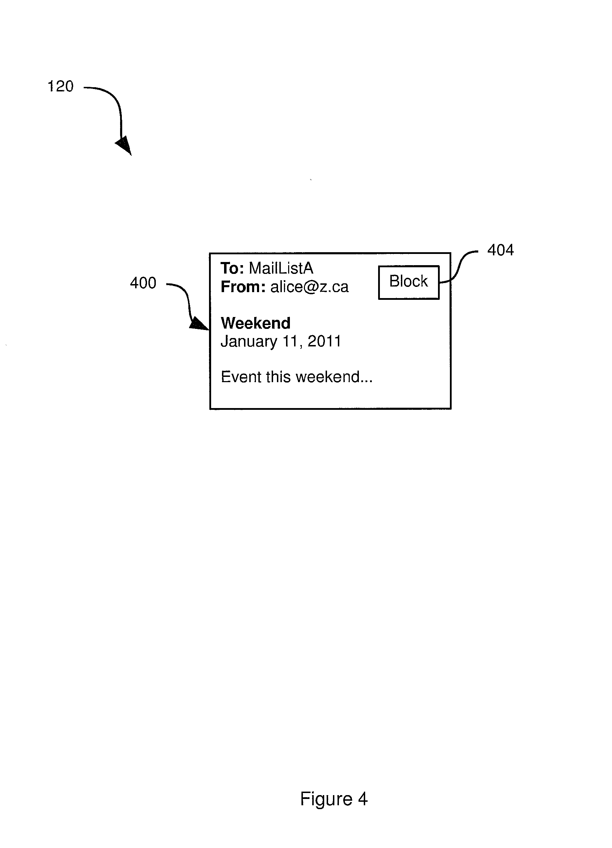

Following the receipt and storage of message 200a, method 300 continues at block 310. At block 310, processor 108 is configured to control display circuitry 124 of display 120 to generate an interface including a representation of message 200a. Turning to Figure 4, an example message interface 400 is shown, as generated by display 120 under the control of processor 108. In addition to representations of various portions of message 200a (such as the recipient address and subject), interface 400 includes a selectable element 404. It is contemplated that although element 404 is labelled "block", such a label is not strictly necessary. Any suitable label, including one or more of textual and graphical labels, can be selected based on the functionality invoked in connection with element 404, to be discussed below. For example, selectable element 404 can be labelled "block thread" in some embodiments.

Returning to Figure 3, method 300 continues at block 315, at which processor 108 is configured to receive a suppression command from an input device, such as keypad 116. Specifically, the suppression command can be input data representative of a selection of element 404 as shown in Figure 4. It is contemplated that "selection", in this context, broadly includes any generation of input data by any input device of mobile electronic device 104 in connection with element 404. For example, selection can include highlighting element 404 on display 104 with a cursor by way of an input device, followed by depression of a key on keypad 116. Processor 108 is configured to interpret input data indicative of a selection of element 404 as a suppression command. In general, a suppression command is a command to processor 108 to suppress the display of at least some subsequent messages at mobile electronic device 104, as will be discussed in greater detail below.

Following the performance of block 315, method 300 proceeds to block 320, at which processor 108 is configured to automatically select suppression criteria. In particular, processor 108 is configured to select the subject of message 200a, as well as at least one of the recipient addresses of message 200a. In the present example performance of method 300, message 200a includes only one recipient address, and thus the suppression criteria selected by processor 108 include the subject "Weekend" and the recipient address "MailListA" as shown in Figure 2. In other embodiments, it is contemplated that message 200a can include multiple recipient addresses. In such embodiments, processor 108 can be configured to select only those recipient addresses that identify distribution lists. In still other embodiments, processor 108 can be configured to select all recipient addresses from message 200a.

Following selection of the suppression criteria, processor 108 is configured to complete the performance of block 320 by storing the selected suppression criteria in memory 112. Referring briefly to Figure 1, suppression criteria can be maintained in a suppression criteria store 180.

Returning to Figure 3, the performance of method 300 proceeds to block 325. At block 325, processor 108 is configured to receive at least one additional suppression criterion. The at least one additional criterion is received as input data from, for example, keypad 116. It is contemplated that in some embodiments, processor 108 can be configured, following receipt of the suppression command at block 315, to control display 120 to generate an additional interface (not shown). The additional interface can include fields into which data can be entered. Thus, data entered in some of the fields in the interface is received by processor 108 as additional suppression criteria. The additional suppression criteria include at least one of an expiry time and a number of subsequent messages for which to bypass suppression. Further discussion of the additional suppression criteria will be provided below. The additional criteria are stored in suppression criteria store 180, and the performance of method 300 proceeds to block 330.

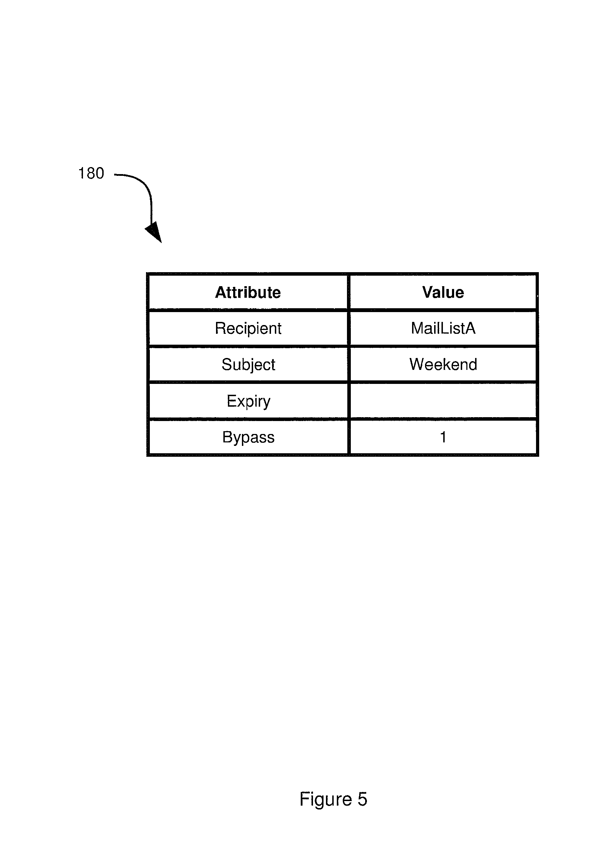

Turning to Figure 5, an example suppression criteria store 180 is depicted, after the performance of block 325. Suppression criteria store 180 is shown in tabular format, although it is contemplated that any suitable format can be used. Suppression criteria store 180 includes an attribute identifier and a value for each suppression criterion present. The header row is provided for illustrative purposes, and need not be present. Thus, in the present example, performance, the recipient address and subject criteria were automatically selected at block 320, while the bypass criterion was received by processor 108 at block 325. Note that in the present example, no expiry criterion was received. In embodiments where an expiry criterion is received, it is contemplated that the expiry criteria can be expressed in any suitable unit of time, or can include a date rather than a duration.

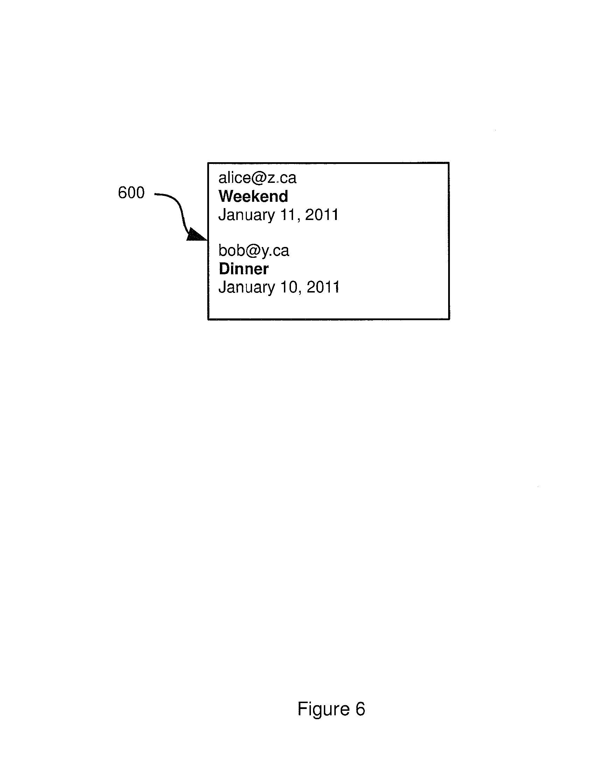

At block 330, processor 108 is configured to suppress the display of at least some subsequent messages, based on the contents of the suppression criteria store 180. It is contemplated that processor 108, via execution of messaging application 176, is configured to generate an interface which comprises a representation of one or more of the messages in local message store 174. An example 600 of such an interface is shown in Figure 6. Interface 600 includes a listing of each of the messages shown in local message store 174 as depicted in Figure 2. It is contemplated that when a greater number of messages are present in local message store 174 than can appear on display 120 at a given time, interface 600 can be scrolled to reveal additional messages.

As a result of the performance of block 330, some subsequent messages which are addressed to mobile electronic device 104 (or to a distribution list which includes mobile electronic device 104) will not be displayed in interface 600. That is, the display of such messages, which would occur under normal circumstances, will not occur (i.e. will be suppressed). In general, the messages whose display will be suppressed are those which have attributes matching the values maintained in suppression criteria store 180. In particular, the display of messages having the same subject and recipient address will be suppressed in accordance with the values of the remaining suppression criteria (i.e. one or both of the expiry and bypass values). In summary, subsequent messages which are related to message 200a by way of matching subjects and recipient addresses are not displayed at mobile electronic device 104. Processor 108 can be configured to accomplish such suppression in a variety of ways.

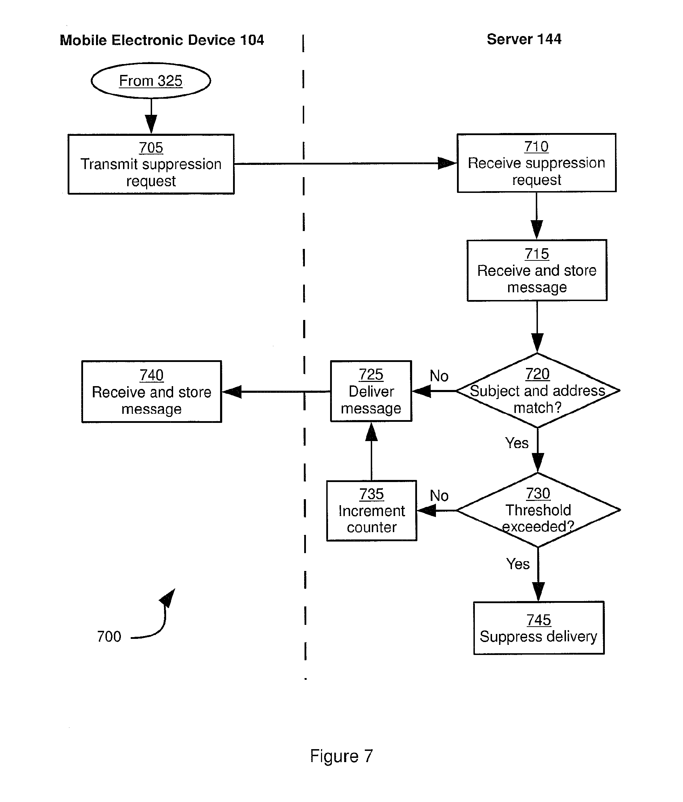

Turning now to Figure 7, a method 700 of suppressing messages is depicted. Method 700 is contained within block 330 of method 300, and thus follows the performance of block 325. Beginning at block 705, mobile electronic device formulates and transmits a suppression request to server 144, via network 140. The suppression request includes at least the values maintained in suppression criteria store 180. At block 710, processor 148 of server 144 is configured to received the suppression request via communications interface 156 and store the request in memory 152.

Proceeding to block 715, server 144 is configured to receive a subsequent message addressed to mobile electronic device 104, for example from personal computer 164. The received message is stored in message store 172. At block 720, processor 148 is configured to determine whether the subject and address of the received message match those in the suppression request received at block 710. Processor 148 is thus configured to compare the subject of the received message with the subject value shown in Figure 5. Processor 148 can be configured to ignore leading characters such as "Re" or "Fwd" which can be prepended to subjects of e-mail messages. Processor 148 is also configured to compare the recipient address or addresses of the received message with the address shown in Figure 5. If the subject and recipient address of the received message both match those from the suppression request, the determination at block 720 will be affirmative. It is contemplated that a positive match for recipient address can occur in a variety of situations. In the present example, processor 148 is configured to detect exact matches. In other words, the determination at block 720 would be negative if the recipient addresses of the received message included "MailListA" and another address (since only MailListA was included in the suppression request). In other embodiments, processor 148 can be configured to detect a match if any of the recipient addresses of the received message match any of the addresses from the suppression request.

If the determination at block 720 is negative (that is, if the subject and recipient address of the received message do not both match the suppression criteria), method 700 proceeds to block 725, at which processor 148 is configured to deliver the message to mobile electronic device 104, where it can be displayed. In the present example performance of method 700, it will be assumed that the determination at block 720 is affirmative, indicating a match between both the subject and recipient address of the received message and the corresponding values of the suppression criteria. Performance of method 700 thus proceeds to block 730, at which processor 148 is configured to determine whether a threshold has been exceeded. Specifically, the counter is created based on the bypass value of the suppression request. In the present example performance of method 700, the bypass value (as seen in Figure 5) is "1". Thus, processor 148 is configured to initialize a counter with a threshold value of 1, preferably on receipt of the suppression request at block 710. More generally, the threshold value is equal to the value assigned to the bypass attribute in the suppression request.

The determination at block 730 enables processor 148 to bypass suppression of a certain number of messages, even though the determination at block 720 was affirmative. In the present example, it is assumed that the message received at block 715 is the first message received since the suppression request. Thus, the determination at block 730 is negative, and the performance of method 700 proceeds to block 735. At block 725, processor 148 is configured to increment the counter to indicate that one message which matches the values in the suppression request has been bypassed (i.e. has not been suppressed). Method 700 then proceeds to block 725, at which processor 148 is configured to deliver the message to mobile electronic device 104. At block 740, mobile electronic device 104 receives the message, for normal display.

If the determination at block 730 were affirmative (that is, the threshold had been exceeded, indicating that suppression had already been bypassed for the desired number of messages), method 700 would proceed to block 745, at which processor 148 is configured to suppress delivery of the message. Such suppression can be accomplished by deleting the message, or by retaining the message in message store 172 but flagging it as not being for delivery. It will be appreciated that as a result of the suppression of delivery of the message, the message will not be displayed in interface 600 at mobile electronic device 104. Thus, suppressing the display of a message at block 330 of method 300 can include the holding of the message at server 144, potentially for future delivery. In other embodiments, the blocks of method 700 performed by server 144 can be performed by other computing devices. For example, suppression requests can be processed, and messages held, at any suitable combination of an enterprise server, a relay, a redirector and a cloud computing-based message store consisting of a plurality of distributed servers.

The performance of blocks 720-745 can be repeated for any number of messages. It is contemplated that blocks 730 and 735 can be omitted when the suppression request does not include a bypass criteria. In embodiments where the suppression request includes an expiry criteria, method 700 can include a determination, performed by processor 148 between blocks 715 and 720, as to whether the suppression request remains current. Such a determination can compare the current date and time to an expiry date specified in the suppression request. If the expiry date has not yet passed, method 700 proceeds to block 720. Otherwise, processor 148 deletes the suppression request (as it has expired) and performs block 725. In other embodiments, the determination can compare the date and time of receipt of the suppression request with the current date and time to determine the duration that has elapsed since receipt. If the duration exceeds a duration specified in the suppression request, method 700 proceeds directly to block 725 and deletes the suppression request, as it is no longer current. Otherwise, method 700 proceeds to block 720.

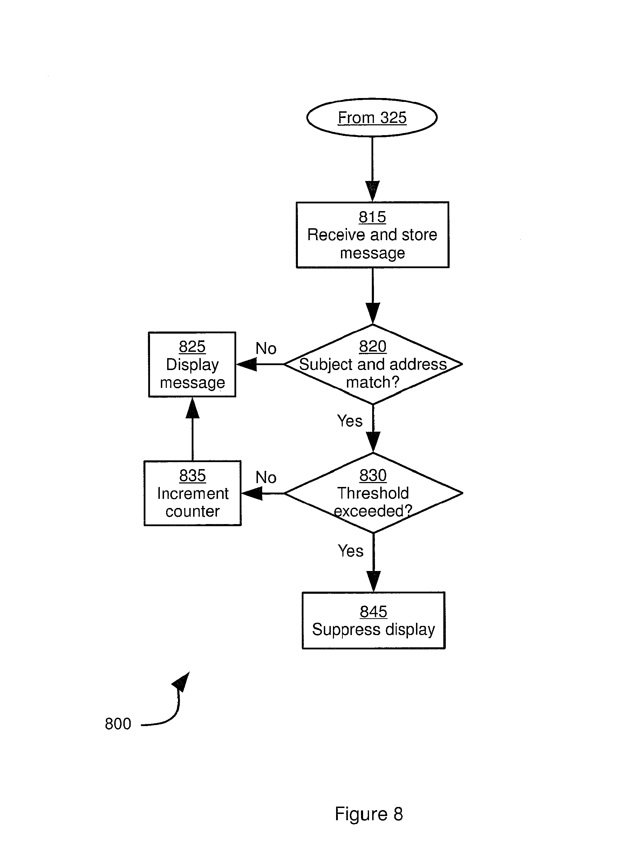

Referring now to Figure 8, a further method 800 of suppressing display of a message is shown. The blocks of method 800 are substantially as described above in connection with similarly numbered blocks of method 700, with the exception that the entirety of method 800 is performed at mobile electronic device 104, in particular by processor 108. Thus, blocks 815, 820, 830 and 835 are as described above in connection with blocks 715, 720, 730 and 735, respectively. Blocks 825 and 845 relate to the display (or suppression thereof) of a message, rather than the delivery of a message. As above, processor 108 can be configured, at block 845, to either delete the message or to mark (for example, by way of a flag in local message store 174) the message so as to remain unavailable for display in interface 600.

It is contemplated that variations and combinations of the methods and systems described above can also be implemented. For example, in some embodiments processor 148 of server 144 can be configured to maintain, in memory 152, a compilation of suppression requests for each message thread (that is, each combination of a subject and certain recipient addresses). Thus, the compilation can include a single indication of the subject and a recipient addresses, along with a list of identifiers for the devices from which suppression requests have been received having the same subject and recipient addresses. Each item in the list (that is, each device identifier) can be associated with one or both of a bypass variable and an expiry variable.

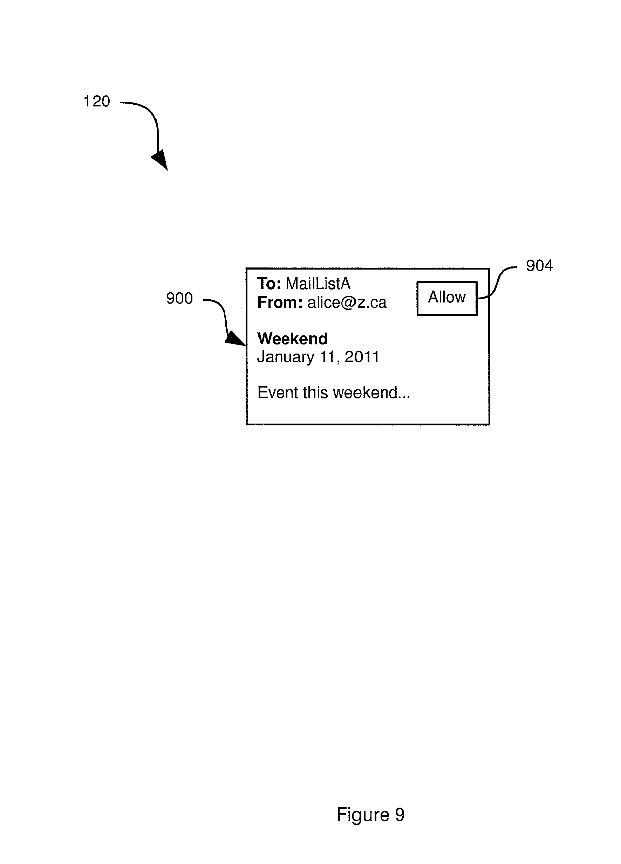

In a further variation, processor 108 of mobile electronic device 104 can be configured to generate a message interface 900, as shown in Figure 9, following suppression of subsequent related messages. Interface 900 is similar to interface 400, with the exception that it includes a selectable element 904 whose selection results in receipt of an "un-suppress" command by processor 108. Processor 108 can be configured to generate interface 900 rather than interface 400 in connection with message 200a after selection of element 404. Receipt of input data by processor 108 indicative of selection of element 904 results in the reversal or cancellation of suppression of messages related to message 200a. In embodiments where server 144 is configured to participate in the suppression of messages, reversal includes the transmission of an instruction from mobile electronic device 104 to server 144, instructing server 144 to delete the suppression request received at block 710.

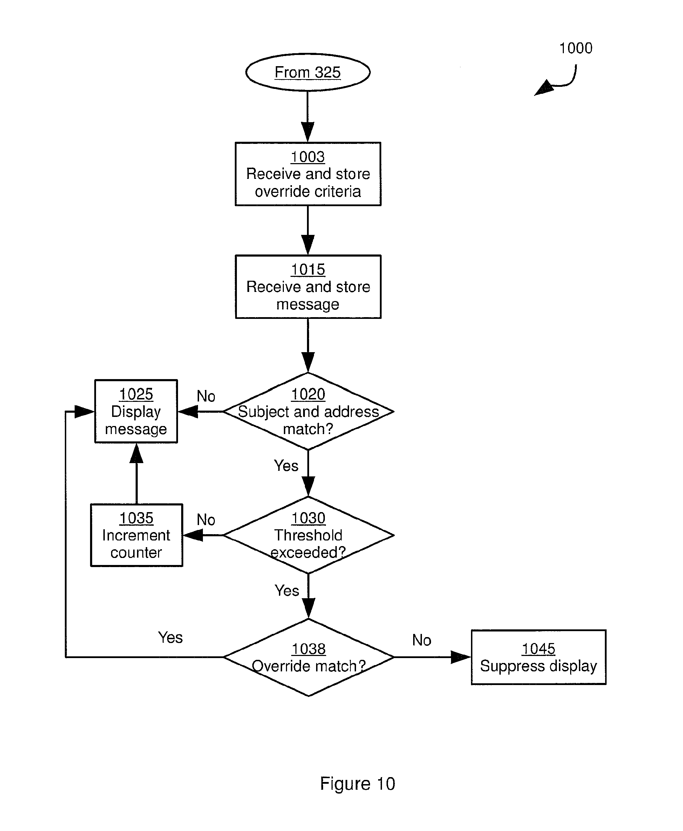

In yet another variation, and now referring to Figure 10, a method 1000 of suppressing display of a message is shown. The blocks of method 1000 are substantially as described above in connection with similarly numbered blocks of methods 700 and 800. As with method 800, the blocks of method 1000 are performed by processor 108 of mobile electronic device 104. It will now be appreciated, however, that at least some of the blocks of method 1000 can also be performed by processor 148 of server 144.

Thus, blocks 1015, 1020, 1025, 1030, 1035 and 1045 are as described above in connection with blocks 815, 820, 825, 830 and 845, respectively. Method 1000 also includes block 1003, at which processor 108 is configured to receive override criteria for storage in memory 112. Override criteria define at least one exception to the suppression criteria and the additional criteria received at blocks 320 and 325 of method 300. In other words, a message whose display would be suppressed as a result of the performance of methods 700 or 800 will not in fact be suppressed as a result of the performance of method 1000.

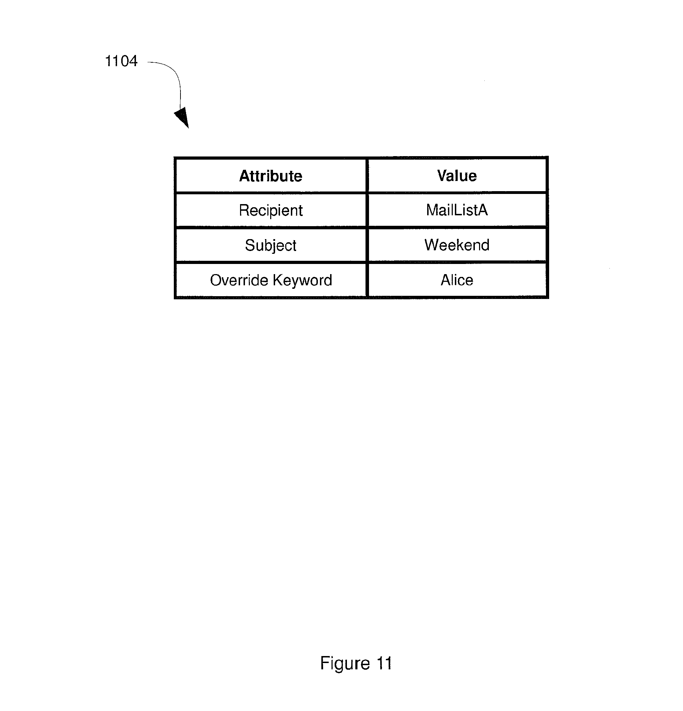

Turning to Figure 11, an example of override criteria 1104 is shown in tabular format (though it will now be apparent that any suitable format can be used). Override criteria 1104 can include data identifying the message thread to which the earlier suppression criteria applies, such as the recipient identifier and the subject. Override criteria 1104 also includes an Override Keyword attribute having the value "Alice". Returning to Figure 10, At block 1003, processor 108 is configured to receive and store override criteria 1104 in memory 112. Override criteria 1104 can be stored separately from suppression criteria 180, or can be appended to suppression criteria 180. Proceeding through the performance of method 1000 as described above in connection with method 800, processor 108 arrives at block 1030. If the determination at block 1030 is affirmative, processor 108, rather than immediately suppressing display of the message received at block 1015, proceeds to block 1038. At block 1038, processor 108 is configured to determine whether the attributes of the received message match those specified in override criteria 1104. In the present example performance of method 1000, override criteria indicate that if the keyword "Alice" occurs in the body of the received message, then the message is not to be delivered. Thus, if the keyword "Alice" appears in the message, performance of method 1000 proceeds to block 1025. Otherwise, suppression of display of the message takes place at block 1045 without being overridden.

Override criteria can 1104 be received at block 1003 substantially simultaneously with the suppression and additional criteria. In other embodiments, override criteria 1104 can be received subsequently, including after one or more complete performances of method 800. It is contemplated that if display of a message is not suppressed as a result of the application of override criteria 1104, the interface comprising a representation of that message may include a selectable element such as element 904, described above in connection with Figure 9.

A wide variety of override criteria are contemplated. For example, override criteria can include any suitable combination of keywords in the body of a message, keywords in the subject of a message, recipient identifiers, sender identifiers, timestamps indicating the time of receipt of the message, and the like.

Those skilled in the art will appreciate that in some embodiments, the functionality of processor 108 as configured via execution of messaging application 176 can also be implemented using pre-programmed hardware or firmware elements (e.g., application specific integrated circuits (ASICs), electrically erasable programmable read-only memories (EEPROMs), etc.), or other related components.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method (300, 700, 800, 1000) of managing messages at a mobile electronic device (104), the method comprising:
receiving (305) a first message, the message containing one or more recipient identifiers and a subject;
controlling (310) a display to generate a message interface (400) comprising a representation of the first message;
receiving (315) a command from an input device, the command being a command to suppress subsequent messages related to the first message;
selecting (320) suppression criteria including the subject and at least one of the one or more recipient identifiers;
receiving (325) input data comprising at least one additional suppression criterion; and,
suppressing (330) the display of subsequently received messages based on the suppression criteria and the at least one additional suppression criterion.

2. The method (300, 700, 800, 1000) of claim 1, wherein receiving (315) the command to suppress subsequent messages comprises receiving input data representative of a selection of an element (404) of the message interface (400).

3. The method (300, 700, 800, 1000) of claim 1 or claim 2, further comprising:
following receipt of the command to suppress subsequent messages, controlling the display to generate a suppression interface comprising at least a subject field and a recipient field, and wherein selecting (320) suppression criteria comprises automatically populating the subject and recipient fields.

4. The method (300, 700, 800, 1000) of any one of claims 1 to 3, wherein the at least one additional suppression criterion includes a number of subsequent messages to bypass prior to beginning suppression.

5. The method (300, 700, 800, 1000) of any one of claims 1 to 4, wherein the at least one additional criterion includes an expiry time for the suppression of messages.

6. The method (300, 700, 800, 1000) of any one of claims 1 to 5, wherein suppressing (330) the display of subsequently received messages includes transmitting (705) a suppression request to a server (144), for causing the server not to deliver the subsequent messages.

7. The method (300, 700, 800, 1000) of any one of claims 1 to 5, wherein suppressing the display of subsequently received messages comprises deleting (845) the subsequent messages at the mobile electronic device (104).

8. A mobile electronic device (104), comprising:
an input device (116, 118);
a display (120);
a communications interface (132);
a memory (112); and,
a processor (108) interconnected with the input device (116, 118), the display (120), the communications interface (132) and the memory (112), the processor (108) configured to receive (305) a first message via the communications interface (132), the message containing one or more recipient identifiers and a subject;
the processor (108) further configured to control (310) the display (120) to generate a message interface (400) comprising a representation of the first message;
the processor (108) further configured to receive (315) a command from the input device, the command being a command to suppress subsequent messages related to the first message;
the processor (108) further configured to select (320) suppression criteria including the subject and at least one of the one or more recipient identifiers;
the processor (108) further configured to receive (325) input data comprising at least one additional suppression criterion; and,
the processor (108) further configured to suppress (330) the display of subsequently received messages based on the suppression criteria and the at least one additional suppression criterion.

9. The mobile electronic device (104) of claim 8, the processor (108) being further configured to receive the command to suppress subsequent messages by receiving input data representative of a selection of an element (404) of the message interface (400).

10. The mobile electronic device (104) of claim 8 or claim 9, the processor (108) being further configured:
following receipt of the command to suppress subsequent messages, to control the display to generate a suppression interface comprising at least a subject field and a recipient field;
to select (320) suppression criteria by automatically populating the subject and recipient fields.

11. The mobile electronic device (104) of any one of claims 8 to 10, wherein the at least one additional suppression criterion includes a number of subsequent messages to bypass prior to beginning suppression.

12. The mobile electronic device (104) of any one of claims 8 to 11, wherein the at least one additional criterion includes an expiry time for the suppression of messages.

13. The mobile electronic device (104) of any one of claims 8 to 12, the processor (108) being further configured to suppress the display of subsequently received messages by transmitting (705) a suppression request to a server (144), for causing the server not to deliver the subsequent messages.

14. The mobile electronic device (104) of any one of claims 8 to 13, the processor (108) being further configured to suppress the display of subsequently received messages by deleting (845) the subsequent messages at the mobile electronic device (104).

15. A non-transitory computer-readable medium (112) for storing a plurality of computer-readable instructions (176) executable by a processor (108), the computer-readable instructions for implementing the method (300, 700, 800, 1000) of any one of claims 1 to 8.
